# EUROPÄISCHE PATENTSCHRIFT

(11) **EP 2 055 174 B1**
(45) Veröffentlichungstag und Bekanntmachung des Hinweises auf die Patenterteilung: **10.11.2010**
(21) Anmeldenummer: 08018518.4
(22) Anmeldetag: 23.10.2008
(51) Int. Cl.: A01D 75/30

(54) **Selbstfahrende landwirtschaftliche Erntemaschine**
Self-propelled agricultural harvester
Moissonneuse agricole automotrice

(30) Priorität: 02.11.2007 DE 102007052798
(43) Veröffentlichungstag der Anmeldung: 06.05.2009
(73) Patentinhaber: Maschinenfabrik Bernard Krone GmbH, 48480 Spelle (DE)
(72) Erfinder: Krone, Bernard, E.H., Dr.-Ing., 48480 Spelle (DE); Horstmann, Josef, Dr.-Ing, 49479 Ibbenbüren (DE); Beutling, Hubert, Dipl.-Ing., 48477 Hörstel (DE)

(56) Entgegenhaltungen:
- EP-A- 1 405 556
- DE-A1- 2 923 821
- US-A- 4 304 086

## Beschreibung

Die Erfindung bezieht sich auf eine selbstfahrende landwirtschaftliche Erntemaschine gemäß dem Oberbegriff des Anspruchs 1. Derartige Erntemaschinen zum Mähen von bodenstehendem Halmgut sind aus der Praxis in zahlreichen Ausführungsformen bekannt und werden vornehmlich zum Ernten von Gras oder dgl. Grünfutter eingesetzt. Im Einsatz auf landwirtschaftlichen Großbetrieben oder bei Lohnunternehmungen enthält das Anforderungsprofil an solche Erntemaschinen nicht nur die Forderung nach möglichst großen Arbeitsbreiten. Vielmehr richten die Anwender ihren Blick insbesondere darauf, ob mit derartigen Erntemaschinen auch eine Schwadzusammenführung erreichbar ist. Darunter versteht man die Ablage des gesamten von den jeweiligen Mäheinrichtungen gemähten Erntegutes in einem gemeinsamen Schwad, so dass dann eine nachfolgende Erntemaschine, beispielsweise in Form eines Feldhäckslers das Erntegut aufnehmen und weiterverarbeiten kann. Die Zuordnung von Fördereinrichtungen zur Schwadzusammenführung zu den jeweiligen Mäheinrichtungen führt aber dazu, dass die Mäheinrichtungen bzw. die Tragelemente der Mäheinrichtungen aufwändiger zu gestalten sind und damit deren Gewicht zunimmt. Diese Umstände wirken sich insbesondere dann sehr deutlich aus, wenn die Mäheinrichtungen wegen der großen Arbeitsbreiten nicht unmittelbar an den Längsseiten der Erntemaschine, sondern mit einem größeren Abstand dazu angeordnet sind.

Aus der US 4,304,086 A ist eine Mähmaschine bekannt geworden, welche in einem Bereich unmittelbar hinter den vorderen Rädern eines Trägerfahrzeuges eine erste Mäheinheit und in einem Bereich seitlich und vor den hinteren Rädern zwei weitere Mäheinheiten aufweist. Die seitlichen Mäheinheiten sind dabei mit zwei in Fahrtrichtung voneinander beabstandet angeordneten Anlenkstellen am Rahmen des Trägerfahrzeuges angelenkt. Eine Zusammenführung des von den drei Mäheinheiten abgemähten Erntegutes dagegen ist hierbei nicht vorgesehen.

Die EP 1 405 556 A2 offenbart eine Erntemaschine des Standes der Technik, bei der einem selbstfahrenden Trägerfahrzeug im Frontbereich eine aus drei Mäheinheiten gebildete Mähwerkskombination vorgeordnet ist. Im Zwischenachsanbau weist diese Erntemaschine weitere zwei Mäheinheiten auf, die in einem größeren Abstand zu den Längsseiten des Trägerfahrzeuges mittels teleskopischer Auslegerarme am Rahmen des Trägerfahrzeuges angelenkt sind. Die beschriebene Ausführungsform ist mit dem Mangel behaftet, dass hier zunächst einmal keine Fördereinrichtungen zur Schwadzusammenführung vorgesehen sind. Da hier neben der üblicherweise vorzusehenden Querförderung des Erntegutes auch noch eine Förderung in einer der Fahrtrichtung entgegen gesetzten Richtung erforderlich wird, entstünde durch die Anbringung von Fördereinrichtungen zur Schwadzusammenführung eine Erntemaschine, die durch einen mit unzulässig hohem Aufwand herzustellende Ausführungsform gekennzeichnet ist. Die Folge davon wäre ein unzulässig hohes Gewicht der Erntemaschine, verbunden mit dem Überschreiten zulässiger Achslasten für den öffentlichen Straßenverkehr.

Aufgabe der Erfindung ist es daher, eine selbstfahrende landwirtschaftliche Erntemaschine zum Ernten von Halmgut zu schaffen, welche über hinreichend große Arbeitsbreiten verfügt und daneben außerdem in der Lage ist, das von den jeweiligen Mäheinheiten gemähte Erntegut in einem Arbeitsgang so abzulegen bzw. zusammen zu führen, dass nachfolgende Erntemaschinen der Erntekette das Erntegut ohne zusätzlichen Aufwand aufnehmen und weiterverarbeiten können. Dabei sollen die durch die Straßenverkehrsordnung vorgeschriebenen Richtlinien, insbesondere zulässige Achslasten nicht überschritten werden.

Erfindungsgemäß wird diese Aufgabe durch die Merkmale des unabhängigen Anspruchs 1 gelöst. In den weiteren Ansprüchen schließen sich vorteilhafte Weiterbildungen der Erfindung an.
1. Nach der Erfindung wird eine selbstfahrende landwirtschaftliche Erntemaschine zum Mähen von bodenstehendem Halmgut bereitgestellt, welche mit zumindest einer Frontmähwerkseinheit und zumindest einem an einer Fahrzeuglängsseite der Erntemaschine angeordneten, sich an die Arbeitsbreite der Frontmähwerkseinheit anschließenden Seitenmähwerks, das sich in der Arbeits- und Betriebsstellung bodennah und hinsichtlich seiner größten Ausdehnung quer zur Fahrt- und Arbeitsrichtung erstreckt, ausgerüstet ist, wobei das zumindest eine Seitenmähwerk über einen Auslegerarm um eine etwa horizontale und in Fahrt- und Arbeitsrichtung gerichtete Achse schwenkbar in eine Transportstellung überführbar ist und jedes Seitenmähwerk über einen Auslegerarm mit einem Rahmen der Erntemaschine verbunden ist und wobei der/die Auslegerarme über zumindest zwei, in Fahrt- und Arbeitsrichtung voneinander beabstandeten Anlenkstellen am Rahmen der Erntemaschine angelenkt sind und der Auslegerarm dann so ausgeführt ist, dass die Anlenkstellen am Rahmen der Erntemaschine jeweils in Fahrt- und Arbeitsrichtung gesehen vor und hinter den Rädern der hinteren Fahrzeugachse gelegen sind und dass das zumindest eine Seitenmähwerk in Fahrt- und Arbeitsrichtung gesehen eine Position einnimmt, durch die eine Ablage des von dem zumindest einen Seitenmähwerk gemähten Erntegutes unmittelbar hinter den Rädern der hinteren Fahrzeugachse erreichbar ist.

Dadurch ergibt sich eine Ausführungsform für die Auslegerarme, bei der ausgehend von der hinter den Rädern der hinteren Fahrzeugachse befindlichen Anlenkstelle ein Tragbalken ausbildet wird, der etwa innerhalb einer durch die hintere Anlenkstelle führenden, vertikalen und sich quer zur Fahrt- und Arbeitsrichtung erstreckenden Ebene auf die Anlenkstelle der Seitenmähwerke zuläuft. Dieser Tragbalken kann dann die Gewichtskräfte der Seitenmähwerke bzw. die Gewichtskräfte der den Seitenmähwerken nachgeordneten Aufbereitungseinheiten und der Fördereinrichtungen zur Schwadzusammenführung aufnehmen. Um die auf diesen Tragbalken einwirkenden, durch das Gleiten der Seitenmähwerke auf dem Boden verursachten Querkräfte (Biegekräfte) auffangen zu können, ist dem Tragbalken an seinem freien Ende ein die Form eines Winkels aufweisender Balken zugeordnet, der sich von dem freien Ende des Tragbalkens zu den vor den Rädern der hinteren Fahrzeugachse befindlichen Anlenkstellen erstrecken. Durch diese Ausgestaltung des Auslegerarms ergibt sich, dass der Tragbalken des Auslegerarms hinsichtlich seiner Bauform und seiner Baugröße sehr kompakt ausgeführt werden kann und somit die Lage der hinter den Rädern der hinteren Fahrzeugachse gelegenen Anlenkstelle des Auslegerarms auf einen möglichst geringen Abstand zur hinteren Fahrzeugachse festgesetzt werden kann. Aufgrund dieser vorteilhaften Ausgestaltung der Auslegerarme der Seitenmähwerke können die erforderlichen Stützlasten an der hinteren Fahrzeugachse in einem günstigen Bereich gehalten werden.

In weiterer Ausgestaltung der Erfindung ist es vorgesehen, dass den Mähwerkzeugen der Frontmähwerkseinheit und der Seitenmähwerke sowohl Aufbereitungseinheiten als auch Fördereinrichtungen zur Schwadzusammenführung nachgeordnet sind. Hierzu kann nach der Erfindung eine Ausformung eines gemeinsamen Schwades des gesamten Erntegutes vorgesehen sein. Denkbar ist es allerdings auch, dass die Seitenmähwerke jeweils an den äußeren Begrenzungen des bearbeiteten Feldstreifens ein Schwad formen, während die Frontmähwerkseinheit(en) ein mittleres Schwad ablegen.

Wie bereits ausgeführt, ergibt sich aus der vorteilhaften Gestaltung der Auslegerarme für die Seitenmähwerke eine Position, die bei der Schwadzusammenführung in einfachen Art und Weise durch die Querförderung des Erntegutes eine Bildung eines gemeinsamen Schwades zulässt. Das gemeinsame Schwad kann also unmittelbar hinter den Rädern der hinteren Fahrzeugachse abgelegt bzw. ausgeformt werden. Durch die Vermeidung einer entgegen der Fahrt- und Arbeitsrichtung der Erntemaschine gerichtete Förderkomponente wird der konstruktive Aufwand ebenfalls gering gehalten.

Durch die Weiterbildung der Erfindung, insbesondere durch das Vorsehen eines weiteren, schwenkbaren Tragarms am freien Ende des Auslegerarms können die Seitenmähwerke in eine Transportstellung verbracht werden, in der die Seitenmähwerke wenigsten annähernd über den Rädern der hinteren Fahrzeugachse angeordnet sind. Dabei nehmen die Seitenmähwerke eine Lage ein, bei der ihre größte Ausdehnung sich zumindest in etwa in Fahrt- und Arbeitsrichtung der Erntemaschine erstreckt. In vorteilhafter Art und Weise können sich die Seitenmähwerke während des Transports dabei auf dem Auslegerarm abstützen.

Zur Überführung der Seitenmähwerke von der Arbeits- und Betriebsstellung in die Transportstellung sind hydraulische Kolben-Zylinder-Anordnungen vorgesehen, welche über die Einleitung der Schwenkbewegung der Auslegerarme die Hubarbeit leisten. Weitere hydraulische Kolben-Zylinder-Anordnungen sorgen für die Verschwenkung der Seitenmähwerke in die in Fahrt- und Arbeitsrichtung weisende Transportlage.

Weitere Vorteile und Einzelheiten der Erfindung ergeben sich aus den Unteransprüchen und einem in der Zeichnung dargestellten Ausführungsbeispiel, das im Folgenden beschrieben wird.

In der Zeichnung zeigt:
- Fig.1:: eine Ansicht von oben auf eine erfindungsgemäße selbstfahrende land- wirtschaftliche Erntemaschine in einer Arbeits- und Betriebsstellung;
- Fig.2:: eine perspektivische Ansicht auf die Erntemaschine in einer Transportstel- lung;
- Fig.3:: eine perspektivische Darstellung der Erntemaschine in der Arbeits- und Betriebsstellung;
- Fig.4:: eine teilweise abgebrochene, perspektivische Darstellung einer Anlenkung eines Seitenmähwerkes in der Arbeits- und Betriebsstellung;
- Fig.5:: eine Darstellung der Anlenkung des Seitenmähwerkes nach Fig.4 jedoch in der Transportstellung;
- Fig.6:: eine Ansicht von hinten auf die Anlenkung des Seitenmähwerkes nach Fig.5;

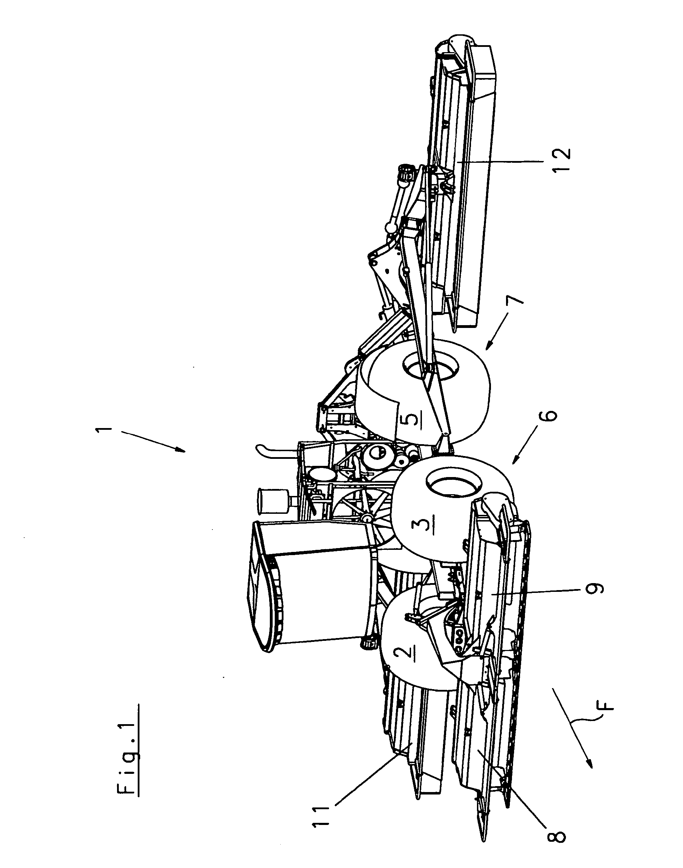

Eine Ausführungsform der Erfindung ist in Fig. 1 in einer Draufsicht näher veranschaulicht. Die dort gezeigte selbstfahrende landwirtschaftliche Erntemaschine 1 stützt sich über Räder 2,3,4,5, die einer vorderen Fahrzeugachse 6 und einer hinteren Fahrzeugachse 7 zugeordnet sind, gegenüber dem Erdboden ab. In Fahrt- und Arbeitsrichtung F gesehen in einem Bereich vor der vorderen Fahrzeugachse 6 weist die Erntemaschine 1 zwei Frontmähwerkseinheiten 8,9 auf, die derartig an einen Rahmen 10 der Erntemaschine 1 angelenkt sind, dass beide Frontmähwerkseinheiten einen durchgehenden Feldstreifen bearbeiten können und dort beispielsweise bodenstehendes Halmgut abmähen. Hier nicht näher dargestellt sind Mittel zum Zusammenführen des von den beiden Frontmähwerkseinheiten 8,9 gemähten Erntegutes zu einem Schwad. Diese Mittel sind jedoch selbstverständlich in den Umfang der Erfindung mit eingebunden. Weiterhin ist es aber auch vorstellbar, an Stelle der zwei Frontmähwerkseinheiten 8,9 nur eine einzige Frontmähwerkseinheit im vorderen Bereich der Erntemaschine einzusetzen. Wie des weiteren der Fig.1 zu entnehmen ist, umfasst die Erntemaschine 1 in ihrem hinteren Bereich zwei weitere Mäheinheiten, die sich an die Arbeitsbreite der Frontmähwerkseinheiten 8,9 anschließen, so dass dadurch ein Feldstreifen mit großer Arbeitsbreite in einer Überfahrt bearbeitet werden kann. Diese beiden weiteren Mäheinheiten sind als Seitenmähwerke 11,12 bezeichnet.

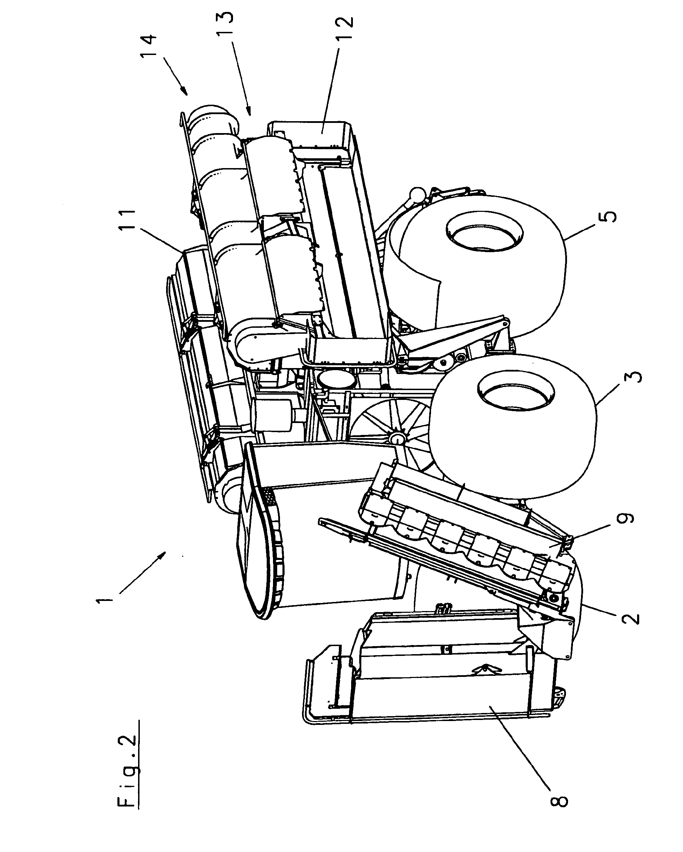

In Fig. 2 ist die Erntemaschine 1 in ihrer Transportstellung dargestellt. Zur Fahrt auf öffentlichen Straßen können dazu die Frontmähwerke 8,9 um eine etwa horizontale und in Fahrt- und Arbeitsrichtung F weisende Achse aus der bodenparallelen Arbeits- und Betriebsstellung in eine etwa vertikale Transportstellung verbracht werden. Aufgrund der großen Einzelarbeitsbreite eines jeden Seitenmähwerkes 11,12 ist es nach der Erfindung vorgesehen, die Seitenmähwerke 11,12 mit den diesen nachgeordneten Aufbereitungseinheiten 13 und den Fördereinrichtungen 14 zur Schwadzusammenführung in eine Transportstellung zu verbringen, in der die Seitenmähwerke 11,12 wenigstens annähernd über den Rädern 4,5 der hinteren Fahrzeugachse 7 angeordnet sind. Sie nehmen dabei eine Lage ein, bei der sie hinsichtlich ihrer größten Ausdehnung in Fahrt- und Arbeitsrichtung F ausgerichtet sind.

Wie bereits vorstehend ausgeführt, umfasst die Erntemaschine 1 in ihrem hinteren

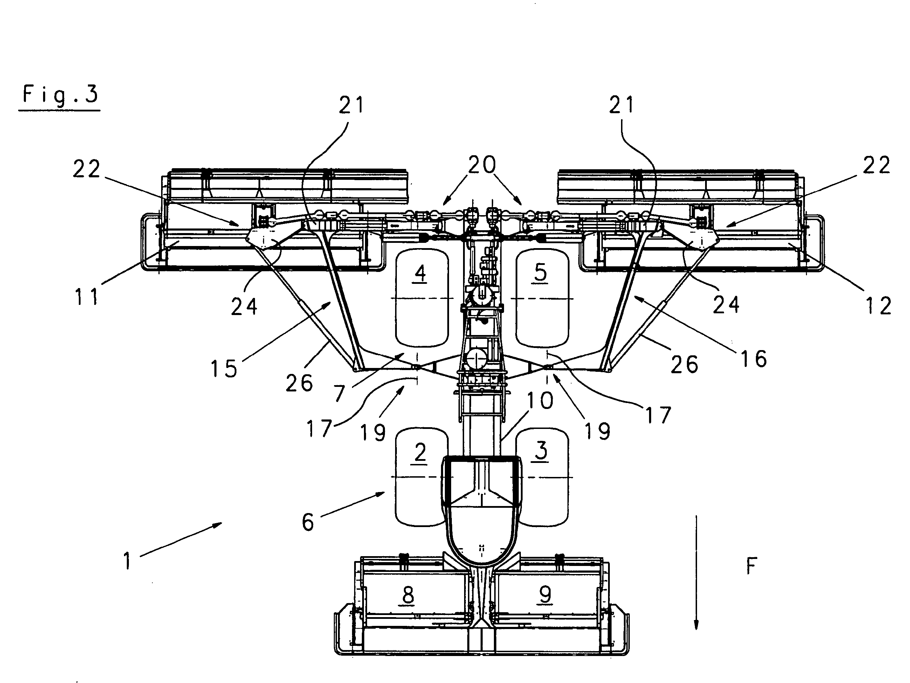

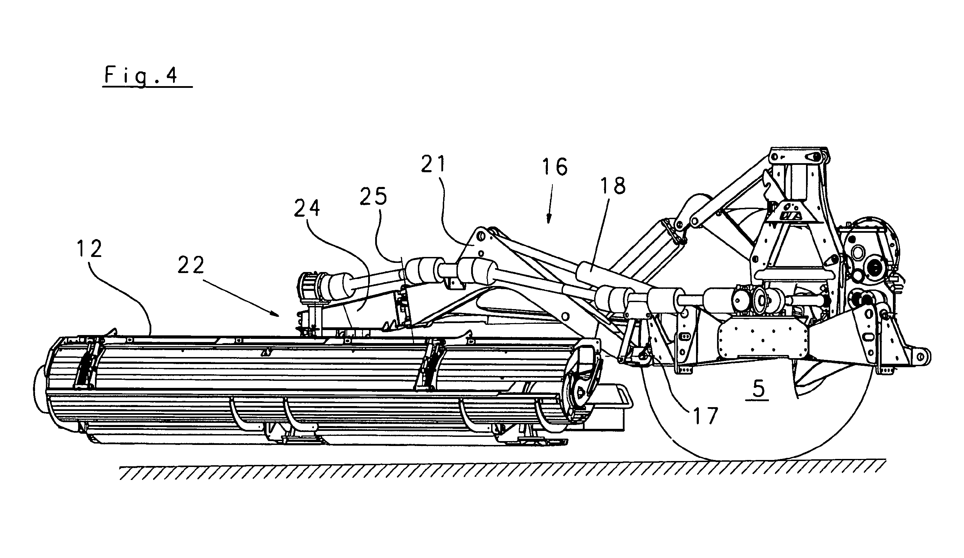

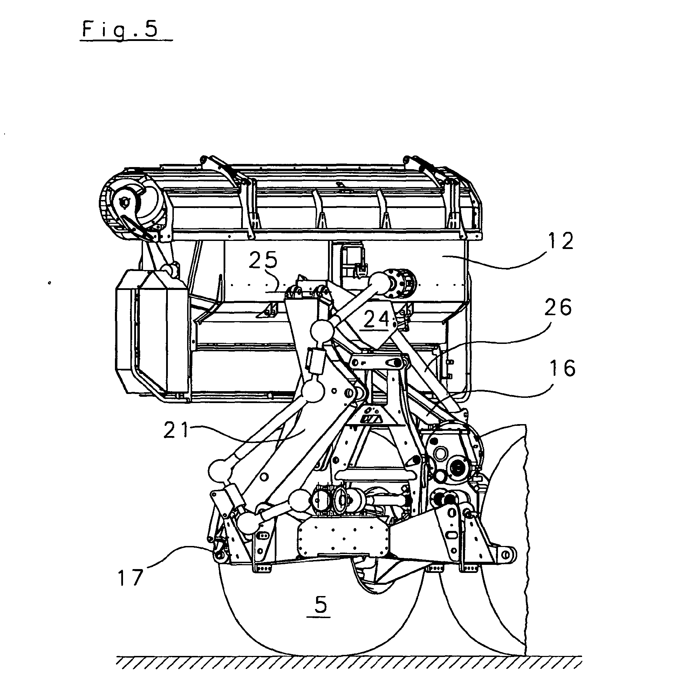

Bereich zwei Seitenmähwerke 11,12, die in Fig. 3 in einer Ansicht von oben in der Arbeits- und Betriebsstellung näher veranschaulicht sind. Aus dieser Fig. ist zu entnehmen, dass die Seitenmähwerke 11,12 über Auslegerarme 15,16 mit dem Rahmen 10 der Erntemaschine 1 verbunden sind. Die Auslegerarme 15,16 sind dazu um horizontale und in Fahrt- und Arbeitsrichtung F gerichtete Achsen 17 schwenkbar am Rahmen 10 der Erntemaschine 1 angelenkt und können somit aus der in Fig. 3 und 4 dargestellte, etwa bodenparallelen Arbeits- und Betriebsstellung in eine etwa vertikale Transportstellung gemäß Fig. 5 verschwenkt werden. Zur Durchführung dieser Verschwenkbewegung ist eine hydraulische Kolben-Zylinder-Anordnung 18 oder dgl. Stellglied vorgesehen.

Erfindungsgemäß sind nun die die Seitenmähwerke tragenden Auslegerarme 15,16 so gestaltet, dass zur Verbindung mit dem Rahmen 10 der Erntemaschine 1 zwei in einem Abstand zueinander angeordnete Anlenkstellen 19,20 aufweisen, wobei eine erste Anlenkstelle 19 in Fahrt- und Arbeitsrichtung F gesehen vor den Rädern 4,5 der hinteren Fahrzeugachse 7 angebracht sind, während zweite Anlenkstellen hinter den Rädern 4,5 der hinteren Fahrzeugachse gelegen sind. Dadurch ergibt sich eine Ausführungsform für die Auslegerarme 15,16, bei der ausgehend von der hinter den Rädern 4,5 der hinteren Fahrzeugachse 7 befindlichen Anlenkstelle 20 ein Tragbalken 21 ausbildet wird, der etwa innerhalb einer durch die hintere Anlenkstelle 20 führenden, vertikalen und sich quer zur Fahrt- und Arbeitsrichtung F erstreckenden Ebene auf eine Anlenkstelle 22 der Seitenmähwerke 11,12 zuläuft. Dieser Tragbalken 21 kann dann die Gewichtskräfte der Seitenmähwerke 11,12 bzw. die Gewichtskräfte der den Seitenmähwerken nachgeordneten Aufbereitungseinheiten 13 und der Fördereinrichtungen 14 zur Schwadzusammenführung aufnehmen. Um die auf diesen Tragbalken 21 einwirkenden, durch das Gleiten der Seitenmähwerke 11,12 auf dem Boden verursachten Querkräfte (Biegekräfte) auffangen zu können, ist dem Tragbalken 21 an seinem freien Ende ein die Form eines Winkels aufweisender Balken 23 zugeordnet, der sich von dem freien Ende des Tragbalkens 21 zu den vor den Rädern 4,5 der hinteren Fahrzeugachse 7 befindlichen Anlenkstelle 19 erstreckt. Durch diese Ausgestaltung des Auslegerarms 15,16 ergibt sich, dass der Tragbalken 21 des Auslegerarms 15,16 hinsichtlich seiner Bauform und seiner Baugröße sehr kompakt ausgeführt werden kann und somit die Lage der hinter den Rädern 4,5 der hinteren Fahrzeugachse 7 gelegenen Anlenkstelle 20 des Auslegerarms 15,16 auf einen möglichst geringen Abstand zur hinteren Fahrzeugachse 7 festgesetzt werden kann. Aufgrund dieser vorteilhaften Ausgestaltung der Auslegerarme 15,16 der Seitenmähwerke 11,12 können die erforderlichen Stützlasten an der hinteren Fahrzeugachse 7 in einem günstigen Bereich gehalten werden. Die weitere Verbindung zwischen den Auslegerarmen 15,16 und den Seitenmähwerken 11,12 wird durch einen weiteren, am freien Ende eines jeden Auslegerarms 15,16 schwenkbar angelenkten Tragarm 24 geschaffen. Die Funktion dieses Tragarmes 24 wird insbesondere in Fig. 4 und 5 verdeutlicht. Wie Fig.4 zeigt, ist die schwenkbare Verbindung zwischen dem Auslegerarm 15,16 und dem Tragarm 24 der Seitenmähwerke 11,12 so gestaltet, dass der Tragarm 24 in der Arbeits- und Betriebsstellung der Seitenmähwerke 11,12 um eine etwa vertikal ausgerichtete Achse 25 bewegbar ist. Diese Schwenkbeweglichkeit wird zur Überführung der Seitenmähwerke aus der Arbeits- und Betriebsstellung in die Transportstellung benutzt, um die Seitenmähwerke in eine Lage wenigstens annähernd über den Rädern 4,5 der hinteren Fahrzeugachse 7 zu verbringen. Die dazu erforderliche Verschwenkbewegung des Tragarmes 24 um die Achse 25 relativ zu dem Auslegerarm 15,16 wird von einer weiteren hydraulischen Kolben-Zylinder-Anordnung 26 eingeleitet. In vorteilhafter Weise stützt sich in der Transportstellung der Seitenmähwerke 11,12 der Tragarm 24 auf dem die Form eines Winkels aufweisenden Balken der Auslegerarme 15,16 ab. Damit eine optimale Bodenanpassung der Seitenmähwerke gewährleistet werden kann, ist die Verbindung zwischen dem Tragarm 24 und den jeweiligen Seitenmähwerken 11,12 frei pendelnd ausgeführt. Für den Transport auf öffentlichen Straßen kann diese frei pendelbare Schwenkverbindung jedoch auch gesperrt werden. Dazu können weitere hydraulische Stellglieder oder sonstige Sperrvorrichtungen vorgesehen sein.

Bezüglich der Fördereinrichtungen 14 zur Schwadzusammenführung ist die Erfindung nicht auf eine spezielle Bauform festgelegt. Hierzu können Förderschnecken oder auch Förderbänder vorgesehen sein, ohne dass dadurch der Umfang der Erfindung verlassen wird.

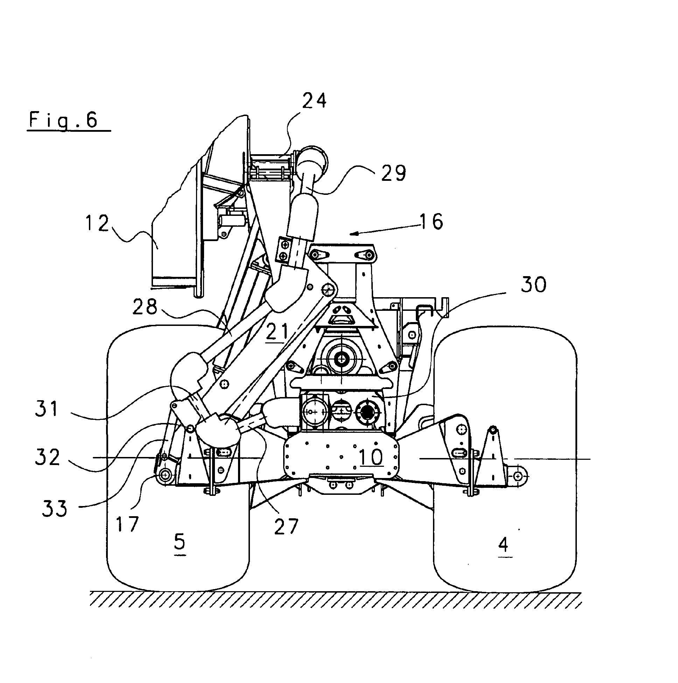

In Fig. 6 ist in einer Ansicht von hinten auf die Erntemaschine 1 eine vorteilhafte Gestaltung des Antriebskonzeptes der Seitenmähwerke 11,12 wiedergegeben, welches eine Beugung der Schwenkgelenke von Gelenkwellen 27,28,29 bei der schwenkbeweglichen Überführung der Seitenmähwerke 11,12 aus der Arbeits- und Betriebsstellung in eine wenigstens annähernd über den Rädern 4,5 gelegene Position. Wie insbesondere aus Fig.6 hervorgeht, umfasst der von einem Verteilergetriebe 30 ausgehende Antriebsstrang zwischen den Gelenkwellen 27 und 28 eine Getriebeeinheit 31, welche um eine Achse 32 schwenkbar am Rahmen 10 gehaltert ist. Eine weitere Stützfunktion der Getriebeeinheit 31 wird von einem Lenker 33 ausgeführt, der einerseits an dem schwenkbeweglichen Tragbalken 21 und andererseits an der Getriebeeinheit 31 angelenkt ist. Daraus ergibt sich die vorteilhafte Nacheilung der Schwenkwinkel des Tragbalkens 21 und des dem Tragbalken 21 folgenden und zu den Seitenmähwerken führenden Antriebsstranges.

## Patentansprüche

1. Selbstfahrende landwirtschaftliche Erntemaschine zum Mähen von bodenstehendem Halmgut, welche über zumindest zwei mit Rädern (2,3,4,5) bestückte Fahrzeugachsen (6,7) gegenüber dem Erdboden abgestützt ist, mit zumindest einer Frontmähwerkseinheit (8,9) und zumindest einem an einer Fahrzeuglängsseite der Erntemaschine angeordneten, sich an die Arbeitsbreite der Frontmähwerkseinheit anschließenden Seitenmähwerks (11,12), das sich in der Arbeits- und Betriebsstellung bodennah und hinsichtlich seiner größten Ausdehnung quer zur Fahrt- und Arbeitsrichtung (F) erstreckt, wobei das zumindest eine Seitenmähwerk (11,12) über einen Auslegerarm um eine etwa horizontale und in Fahrt- und Arbeitsrichtung (F) gerichtete Achse (17) schwenkbar in eine Transportstellung überführbar ist und jedes Seitenmähwerk (11,12) über einen Auslegerarm (15,16) mit einem Rahmen (10) der Erntemaschine (1) verbunden ist, wobei der/die Auslegerarme (15,16) über zumindest zwei, in Fahrt- und Arbeitsrichtung (F) voneinander beabstandeten Anlenkstellen (19,20) am Rahmen (10) der Erntemaschine angelenkt sind, **dadurch gekennzeichnet, dass** sich eine der Anlenkstellen (19) des Auslegerarms (15,16) in Fahrt- und Arbeitsrichtung (F) vor dem Rad (4,5) der hinteren Fahrzeugachse (7) befindet, während die weitere Anlenkstelle (20) in Fahrt- und Arbeitsrichtung (F) hinter dem Rad (4,5) der hinteren Fahrzeugachse (7) gelegen ist und dass das zumindest eine Seitenmähwerk (11,12) in Fahrt- und Arbeitsrichtung (F) gesehen eine Position einnimmt, durch die eine Ablage des von dem zumindest einen Seitenmähwerk (11,12) gemähten Erntegutes unmittelbar hinter den Rädern (4,5) der hinteren Fahrzeugachse (7) erreichbar ist.

2. Selbstfahrende landwirtschaftliche Erntemaschine nach Anspruch 1, **dadurch gekennzeichnet, dass** das zumindest eine Seitenmähwerk (11,12) mit einer den Mähwerkzeugen nachgeordneten Aufbereitungseinheit (13) ausgerüstet ist.

3. Selbstfahrende landwirtschaftliche Erntemaschine nach Anspruch 1, **dadurch gekennzeichnet, dass** das zumindest eine Seitenmähwerk (11,12) mit einer den Mähwerkzeugen nachgeordneten Aufbereitungseinheit (13) und einer sich an dieser anschließenden Fördereinrichtung (14) zur Bildung eines, das abgemähte Erntegut der Frontmähwerkseinheit (8,9) und des zumindest einen Seitenmähwerks (11,12) enthaltenen Schwades versehen ist.

4. Selbstfahrende landwirtschaftliche Erntemaschine nach zumindest einem der Ansprüche 1 und 2, **dadurch gekennzeichnet, dass** die sich an die Aufbereitungseinheit (13) des zumindest einen Seitenmähwerks (11,12) anschließende Fördereinrichtung so gestaltet ist, dass die Bildung mehrerer Erntegutschwade hinter der Erntemaschine erreichbar ist.

5. Selbstfahrende landwirtschaftliche Erntemaschine nach zumindest einem der Ansprüche 1 bis 4, **dadurch gekennzeichnet, dass** das zumindest eine Seitenmähwerk (11,12) in der Transportstellung in eine Position verbringbar ist, welche sich wenigstens annähernd über den Rädern (4,5) der hinteren Fahrzeugachse (7) der Erntemaschine befindet.

6. Selbstfahrende landwirtschaftliche Erntemaschine nach zumindest einem der Ansprüche 1 bis 5, **dadurch gekennzeichnet, dass** das zumindest eine Seitenmähwerk (11,12) in der Transportstellung eine Lage aufweist, in der dieses hinsichtlich seiner größten Ausdehnung zumindest in etwa in Fahrt- und Arbeitsrichtung (F) ausgerichtet ist.

7. Selbstfahrende landwirtschaftliche Erntemaschine nach zumindest einem der Ansprüche 1 bis 6, **dadurch gekennzeichnet, dass** zur Anlenkung des zumindest einen Seitenmähwerks (11, 12) an den Auslegerarm (15,16) ein weiterer Tragarm (24) vorgesehen ist, der sich wenigstens annähernd in einer durch die hinter den Rädern (4,5) der hinteren Fahrzeugachse (7) gelegenen Anlenkstelle (20) des Auslegerarms (15,16) erstreckenden, vertikalen und quer zur Fahrt- und Arbeitsrichtung (F) ausgerichteten Ebene an den Auslegerarm (15,16) anschließt.

8. Selbstfahrende landwirtschaftliche Erntemaschine nach zumindest einem der Ansprüche 1 bis 7, **dadurch gekennzeichnet, dass** das der weitere Tragarm (24) um eine in der Arbeits- und Betriebsstellung des Auslegerarms (15,16) etwa vertikal ausgerichtete Achse (25) mit diesem schwenkbar verbunden ist.

9. Selbstfahrende landwirtschaftliche Erntemaschine nach zumindest einem der Ansprüche 1 bis 8, **dadurch gekennzeichnet, dass** durch die schwenkbare Anlenkung des weiteren Tragarmes (24) an dem Auslegerarm (15,16) die Anordnung des zumindest einen Seitenmähwerks (11,12) in der in Fahrt- und Arbeitsrichtung sich erstreckenden Transportlage erreichbar ist.

10. Selbstfahrende landwirtschaftliche Erntemaschine nach zumindest einem der Ansprüche 1 bis 9, **dadurch gekennzeichnet, dass** das zumindest eine Seitenmähwerk (11,12) in der Transportlage auf dem Auslegerarm (15,16) abstützbar ausgebildet ist.

11. Selbstfahrende landwirtschaftliche Erntemaschine nach zumindest einem der Ansprüche 1 bis 10, **dadurch gekennzeichnet, dass** zur Überführung des zumindest einen Seitenmähwerks (11,12) aus der Arbeits- und Betriebsstellung in die Transportstellung eine hydraulische Kolben-Zylinder-Anordnung (18) oder dgl. Stellglied, welche sich zwischen dem Rahmen (10) der Erntemaschine und dem Auslegerarm (15,16) erstreckt und eine sich an dem Auslegerarm (15,16) abstützende und auf den Tragarm (24) einwirkende hydraulische Kolben-Zylinder-Anordnung (26) zur Verbringung des zumindest einen Seitenmähwerks (11,12) in die in Fahrt- und Arbeitsrichtung (F) gerichtete Transportlage vorgesehen ist.

12. Selbstfahrende landwirtschaftliche Erntemaschine nach zumindest einem der Ansprüche 1 bis 11, **dadurch gekennzeichnet, dass** das zumindest eine Seitenmähwerk (11,12) wenigstens annähernd in seinem Schwerpunkt an dem freien Ende des Tragarms (24) schwenkbar angelenkt ist.

13. Selbstfahrende landwirtschaftliche Erntemaschine nach Anspruch 12, **dadurch gekennzeichnet, dass** das zumindest eine Seitenmähwerk (11,12) in der Transportstellung durch hydraulische Stellglieder arretierbar ausgebildet ist.

## Claims

1. Self-propelled agricultural harvester for reaping stalked surface crops which is supported relative to the ground by at least two axles (6, 7) fitted with wheels (2, 3, 4, 5), having at least one front cutter bar unit (8, 9) and at least one side cutter bar (11, 12), which at least one side cutter bar (11, 12) is arranged on one longitudinal side of the harvester, forms a continuation of the working width of the front cutter bar unit and, in the working and operating position, extends close to the ground and, in its direction of maximum extent, transversely to the direction of travel and operation (F), the at least one side cutter bar (11, 12) being transferrable to a position for transport by pivoting, by means of a boom, about an approximately horizontal axis (17) which is aligned in the direction of travel and operation (F), and each side cutter bar (11, 12) being connected by a boom (15, 16) to a chassis (10) of the harvester (1), the boom/booms (15, 16) being hinged to the chassis (10) of the harvester at at least two hinge points (19, 20) which are spaced apart from one another in the direction of travel and operation (F), **characterised in that** one of the hinge points (19) of the boom (15, 16) is situated in front of the wheel (4, 5) of the rear axle (7) in the direction of travel and operation (F) whereas the other hinge point (20) is situated to the rear of the wheel (4, 5) of the rear axle (7) in the direction of travel and operation (F), and **in that**, looking in the direction of travel and operation (F), the at least one side cutter bar (11, 12) assumes a position by means of which it is possible to achieve deposit of the harvested crop reaped by the at least one side cutter bar (11, 12) immediately behind the wheels (4, 5) of the rear axle (7).

2. Self-propelled agricultural harvester according to claim 1, **characterised in that** the at least one side cutter bar (11, 12) is fitted with a processing unit (13) positioned downstream of the cutting tools.

3. Self-propelled agricultural harvester according to claim 1, **characterised in that** the at least one side cutter bar (11, 12) is provided with a processing unit (13) positioned downstream of the cutting tools and with a feeding arrangement (14) which follows on from this latter to create a windrow comprising the reaped harvested crop from the front cutter bar unit (8, 9) and the at least one side cutter bar (11, 12).

4. Self-propelled agricultural harvester according to at least one of claims 1 and 2, **characterised in that** the feeding arrangement which follows on from the processing unit (13) of the at least one side cutter bar (11, 12) is so designed that it is possible for a plurality of windrows of harvested crop to be created behind the harvester.

5. Self-propelled agricultural harvester according to at least one of claims 1 to 4, **characterised in that** the at least one side cutter bar (11, 12) can be brought to a position, in the position for transport, in which it is situated at least approximately above the wheels (4, 5) of the rear axle (7) of the harvester.

6. Self-propelled agricultural harvester according to at least one of claims 1 to 5, **characterised in that**, in the position for transport, the at least one side cutter bar (11, 12) is in a position in which its direction of maximum extent is aligned at least approximately in the direction of travel and operation (F).

7. Self-propelled agricultural harvester according to at least one of claims 1 to 6, **characterised in that**, to hinge the at least one side cutter bar (11, 12) to the boom (15, 16), a further supporting arm (24) is provided which forms a continuation of the boom (15, 16) at least approximately in a vertical plane which is aligned transversely to the direction of travel and operation (F) and which extends through that hinge point (20) of the boom (15, 16) which is situated to the rear of the wheels (4, 5) of the rear axle (7).

8. Self-propelled agricultural harvester according to at least one of claims 1 to 7, **characterised in that** the further supporting arm (24) is connected to the boom (15, 16) in such a way as to be pivotable about an axis (25) which is aligned approximately vertically when the boom (15, 16) is in the working and operating position.

9. Self-propelled agricultural harvester according to at least one of claims 1 to 8, **characterised in that** the arranging of the at least one side cutter bar (11, 12) in the position for transport in which it extends in the direction of travel and operation can be achieved by means of the pivotable hinging of the further supporting arm (24) on the boom (15, 16).

10. Self-propelled agricultural harvester according to at least one of claims 1 to 9, **characterised in that** the at least one side cutter bar (11, 12) is designed to be supportable on the boom (15, 16) in the position for transport.

11. Self-propelled agricultural harvester according to at least one of claims 1 to 10, **characterised in that** there are provided, for the transfer of the at least one side cutter bar (11, 12) from the working and operating position to the position for transport, a hydraulic piston-and-cylinder arrangement (18) or a similar positioner which extends between the chassis (10) of the harvester and the boom (15, 16) and a hydraulic piston-and-cylinder arrangement (26) which is supporting on the boom (15, 16) and which acts on the supporting arm (24), for moving the at least one side cutter bar (11, 12) to the position for transport in which it is aligned in the direction of travel and operation (F).

12. Self-propelled agricultural harvester according to at least one of claims 1 to 11, **characterised in that** it is at least approximately at its centre of gravity that the at least one side cutter bar (11, 12) is hinged to the free end of the supporting arm (24) to be pivotable.

13. Self-propelled agricultural harvester according to claim 12, **characterised in that** the at least one side cutter bar (11, 12) is designed to be lockable in the position for transport by hydraulic positioners.

## Revendications

1. Moissonneuse agricole automotrice pour faucher des produits en tige sur pied, comprenant :
- au moins deux essieux (6, 7) équipés de roues (2, 3, 4, 5) de sustentation,
- au moins une unité frontale de fauche (8, 9) et au moins une unité latérale de fauche (11, 12) installée sur l'un des côtés longitudinaux de la moissonneuse, et se raccordant à la largeur de travail de l'unité frontale de fauche, cette unité latérale s'étendant en position de travail et de fonctionnement, à proximité du sol et sa plus grande extension est dirigée transversalement à la direction de déplacement et de travail (F),
- au moins cette unité latérale de fauche (11, 12) peut passer par l'intermédiaire d'un bras de déploiement d'une position sensiblement horizontale dans une position de transport, par basculement autour d'un axe (17) dirigé dans la direction de déplacement et de travail (F), et
- chaque unité latérale de fauche (11, 12) est reliée par un bras de déploiement (15, 16) au châssis (10) de la moissonneuse (1),
- le ou les bras de déploiement (15, 16) sont articulés par l'intermédiaire d'au moins deux points d'articulation (19, 20) écartés l'un de l'autre dans la direction de déplacement et de travail (F), au châssis (10) de la moissonneuse,
moissonneuse **caractérisée en ce que**
l'un des points d'articulation (19) du bras de déploiement (15, 16) se situe devant la roue (4, 5) de l'essieu arrière (7) selon la direction de déplacement et de travail (F) alors que l'autre point d'articulation (20) se situe derrière la roue (4, 5) selon la direction de déplacement et de travail (F), de l'essieu arrière (7), et
au moins une unité latérale de fauche (11, 12) prend une position, lorsqu'on regarde dans la direction de déplacement et de travail (F), permettant aux produits fauchés par au moins cette unité de fauche latérale (11, 12) d'arriver directement derrière les roues (4, 5) de l'essieu arrière (7).

2. Moissonneuse agricole automotrice selon la revendication 1,
**caractérisée en ce qu'**
au moins un groupe latéral de fauche (11, 12) est équipé d'une unité de préparation (13) en aval des outils de fauche.

3. Moissonneuse agricole automotrice selon la revendication 1,
**caractérisée en ce qu'**
au moins une unité latérale de fauche (11, 12) est munie d'une unité de préparation (13) en aval des outils de coupe et une installation de transfert (14) faisant suite, pour former un andain, avec les produits de récolte, coupés, par l'unité frontale de fauche (8, 9) et par au moins l'une des unités latérales de fauche (11, 12).

4. Moissonneuse agricole automotrice selon l'une des revendications 1 et 2,
**caractérisée en ce que**
l'installation de transfert qui fait suite à l'unité de préparation (13) d'au moins une unité latérale de fauche (11, 12) est réalisée pour former plusieurs andains de produits derrière la moissonneuse.

5. Moissonneuse agricole automotrice selon l'une des revendications 1 et 4,
**caractérisée en ce qu'**
au moins une unité latérale de fauche (11, 12) peut être mise en position de transport, dans une position qui se trouve au moins sensiblement au-dessus des roues (4, 5) de l'essieu arrière (7) de la moissonneuse.

6. Moissonneuse agricole automotrice selon l'une des revendications 1 et 5,
**caractérisée en ce qu'**
en position de transport au moins une unité latérale de fauche (11, 12) est dans une position dans laquelle sa plus grande dimension est alignée au moins sensiblement sur la direction de déplacement et de travail (F).

7. Moissonneuse agricole automotrice selon l'une des revendications 1 et 6,
**caractérisée en ce que**
au moins une unité latérale de fauche (11, 12) est articulée au bras de déploiement (15, 16) par au moins un autre bras de support (24) qui rejoint le bras de déploiement (15, 16), au moins sensiblement dans un plan passant par le point d'articulation (20) du bras de déploiement (15, 16) situé derrière les roues (4, 5) de l'essieu arrière (7), verticalement et transversalement à la direction de déplacement et de travail (F).

8. Moissonneuse agricole automotrice selon l'une des revendications 1 et 7,
**caractérisée en ce que**
l'autre bras de support (24) est relié de manière pivotante autour d'un axe (25) aligné sensiblement verticalement en position de travail et position de fonctionnement du bras de déploiement (15, 16).

9. Moissonneuse agricole automotrice selon l'une des revendications 1 et 8,
**caractérisée en ce que**
l'articulation pivotante de l'autre bras de support (24) sur le bras de déploiement (15, 16) permet l'installation d'au moins une unité latérale de fauche (11, 12) dans une position de transport qui s'étend dans la direction de déplacement et la direction de travail.

10. Moissonneuse agricole automotrice selon l'une des revendications 1 et 9,
**caractérisée en ce qu'**
en position de transport au moins une unité latérale de fauche (11, 12) s'appuie sur le bras de déploiement (15, 16).

11. Moissonneuse agricole automotrice selon l'une des revendications 1 et 10,
**caractérisée en ce que**
un vérin hydraulique (18) ou actionneur analogue, s'étendant entre le châssis (10) de la machine et le bras de déploiement (15, 16) fait passer au moins une unité latérale de fauche (11, 12) de sa position de travail et de fonctionnement dans sa position de transport, et un vérin hydraulique (26) s'appuyant sur le bras de déploiement (15, 16) et sur le bras de support (24), relie au moins cette unité latérale de fauche (11, 12) dans la position de transport dirigée dans la direction de déplacement et de travail (F).

12. Moissonneuse agricole automotrice selon l'une des revendications 1 et 11,
**caractérisée en ce qu'**
au moins une unité latérale de fauche (11, 12) est articulée au moins sensiblement à proximité de son centre de gravité à l'extrémité libre du bras de support (24) de façon à pouvoir pivoter.

13. Moissonneuse agricole automotrice selon la revendication 12,
**caractérisée en ce qu'**
au moins une unité latérale de fauche (11, 12) est réalisée de façon à être bloquée en position de transport par des actionneurs hydrauliques.
